# EUROPEAN PATENT SPECIFICATION

(11) **EP 4 328 687 B1**
(45) Date of publication and mention of the grant of the patent: **05.03.2025**
(21) Application number: 22192273.5
(22) Date of filing: 26.08.2022
(51) Int. Cl.: G05B 23/02

(54) **METHOD AND SYSTEM FOR IDENTIFYING A ROOT CAUSE OF AN EVENT**
VERFAHREN UND SYSTEM ZUR IDENTIFIZIERUNG EINER GRUNDURSACHE EINES EREIGNISSES
PROCÉDÉ ET SYSTÈME D'IDENTIFICATION D'UNE CAUSE FONDAMENTALE D'UN ÉVÉNEMENT

(43) Date of publication of application: 28.02.2024
(73) Proprietor: Siemens AG Österreich, 1210 Wien (AT)
(72) Inventor: Ionescu, Tudor, 1080 Wien (AT); Sabou, Marta, 1140 Wien (AT)
(74) Representative: Siemens Patent Attorneys

(56) References cited:
- US-A1- 2019 286 725
- US-A1- 2021 111 943
- JEYAKUMAR VIMALKUMAR J VIMAL@GMAIL COM ET AL: "ExplainIt! -- A Declarative Root-cause Analysis Engine for Time Series Data", DESIGNING INTERACTIVE SYSTEMS CONFERENCE, ACM, 2 PENN PLAZA, SUITE 701NEW YORKNY10121-0701USA, 25 June 2019 (2019-06-25), pages 333 - 348, XP058637613, ISBN: 978-1-4503-5850-7, DOI: 10.1145/3299869.3314048

## Description

The present invention concerns a method and a system for identifying a root cause or source of an event, for instance an anomaly in a smart grid system. More generally speaking, the present invention falls within the field of automated plant monitoring systems using computer-implemented detection techniques for detecting events in monitored signals of a plant.

Anomaly, changepoint, segmentation and, more generally, event detection methods (short ACSE methods) for time series data are being used in different automation domains, (e.g., digital grid, industrial manufacturing, autonomous driving, etc.). Such methods provide insights as to how a system performs during operation and whether the current performance of the system may lead to unwanted situations and thus requires corrections. ACSE methods are used "online" in operational systems to prevent (catastrophic) failures or "offline," e.g., in time series mining and root cause analysis. In the latter case, they facilitate a better understanding of the behavior of possibly large, autonomous automation systems, which helps to correct and prevent unwanted behaviors.

Currently, machine learning (ML) based ACSE methods are state of the art. ML-based ACSE methods are usually trained offline using data provided by expert users, who visually identify events of interest in time series data. Users label short segments of the time series as being a kind of event of interest. Autoregression, autocorrelation, autoencoder, and other ML methods are then trained to detect those events of interest based on the labeled training data provided by users.

Another unsupervised approach is to run a clustering method on the time series data in order to identify recurring patterns in the data. Once identified, these patterns are analyzed and labeled by users and are added to knowledge data bases for future use.

There are currently several problems with these approaches:
(1) They require visual inspection and manual labeling by domain experts, which is a time-consuming, expensive and error-prone activity;
(2) As a result of (1), they are contingent on the varying understandings and expertise of different domain experts;
(3) They do not provide explanations on why an event occurs beyond the user-provided labeling scheme;
(4) Therefore, they cannot be automatically coupled to further explanation systems, such as a root cause analysis (RCA) tool;
(5) They are also not able to automatically identify the source or cause of a detected event.

There is therefore a need for a method and system for automatically identifying the root cause of an event.

The article by J. VIMALKUMAR ET AL.: "ExplainIt! - A Declarative Root-cause Analysis Engine for Time Series Data" shows an unsupervised root cause analysis engine that uses time series data from a monitored system. Causal hypotheses may be specified and ranked using declarative language queries by operators in a database.

US 2019/286725 A1 shows a database systems for storing multidimensional time-series telemetry data which performs intelligent preprocessing on multi-dimensional time-series data to facilitate subsequent prognostic-surveillance operations to proactively detect impending problems in monitored assets.

US 2021/111943 A1 shows automated grouping of identified, causal related abnormal operating conditions observed on a monitored environment using grouping of abnormal operating conditions with respect to shared resources.

In this context, the present invention proposes a method and system for automatically identifying the root cause of an event according to the object of the independent claims. Dependent claims present further advantages of the invention.

The invention concerns thus a method for automatically identifying a root cause of an event detected for a monitored system (e.g. a plant, manufacturing system, production machine system, or any other physical system configured for realizing automation processes), typically a physical automation system, the method comprising:
- acquiring, via a first interface, at least one set of time series data representing a temporal evolution of a physical quantity value measured for one or several components of this monitored system;
- feeding each set of time series data into a main detection algorithm comprising an ensemble of N secondary detection algorithms, wherein each secondary detection algorithm A_i, i=1,...,N, is configured for using a statistical criterion C_i for detecting an event in the time series data received as input;
- outputting, by said main detection algorithm and for each set received as input by the latter, a statistical label configured for encoding for each of said secondary detection algorithms A_i a detection result R_i obtained by the concerned secondary detection algorithm A_i for the set received as input;
- for each statistical label, automatically determining whether the latter encodes at least one detection of an event, and in the affirmative, automatically generating a first query based on the statistical label and technical metadata associated to the set of time series at the origin of said statistical label, wherein said first query is configured for searching one or several causal factors for the detected event;
- using said first query for automatically performing a first search in a semantic database in order to determine a list Q1_CF of causal factors for said detected event, wherein said semantic database is configured for describing the monitored system;
- using said list Q1_CF for creating a second query configured for determining a list Q2_RC of root causes for the detected event, wherein said second query is a function of the list Q1_CF and is configured for finding in said semantic database any root cause that relates to at least one of the causal factors of said list Q1_CF;
- using said second query for automatically performing a second search in the semantic database in order to determine said list Q2_RC of root causes RC_j for said detected event, wherein j=1, ... , M, with M being the number of found root causes when performing the second search;
- for each root cause RC_j of said list Q2_RC, automatically finding, in said semantic database and by executing a third query, all causal factors associated to the root cause RC_j, and listing for each root cause RC_j of the list Q2_RC the found causal factors in a list Q3_RC_j;
- automatically determining for each root cause RC_j the number of causal factors comprised within the list Q3_RC_j that are also comprised within the list Q1_CF, and ranking the root causes RC_j according to the determined numbers, wherein the higher the number, the higher the rank;
- automatically providing, via a second interface, an identification result for the identification of the root cause of the detected event, wherein said identification result comprises an identifier of the root cause with the higher rank, and optionally an identifier of said component for which a positive result has been obtained.

The present invention also concerns a data processing system comprising a processor and an accessible memory, wherein the data processing system is configured for implementing the previously described method.

Finally, a non-transitory computer-readable medium encoded with executable instructions is also disclosed, wherein an execution of said executable instructions causes one or more data processing systems to perform the previously described method.

The invention will be explained in yet greater detail with reference to exemplary embodiments depicted in the drawings as appended.

The accompanying drawings are included to provide a further understanding of the present invention and are incorporated in and constitute a part of the specification. The drawings illustrate the embodiments of the present invention and together with the description serve to illustrate the principles of the invention. Other embodiments of the present invention and many of the intended advantages of the present invention will be readily appreciated as they become better understood by reference to the following detailed description. Like reference numerals designate corresponding similar parts.

In the figures
- FIG 1: shows schematically a data processing system according to the invention;
- FIG 2: shows a schematic flow diagram illustrating the method according to the invention;
- FIG 3: shows schematically examples of changes in statistical properties of a time series;
- FIG 4: shows schematically a knowledge graph according to the invention.

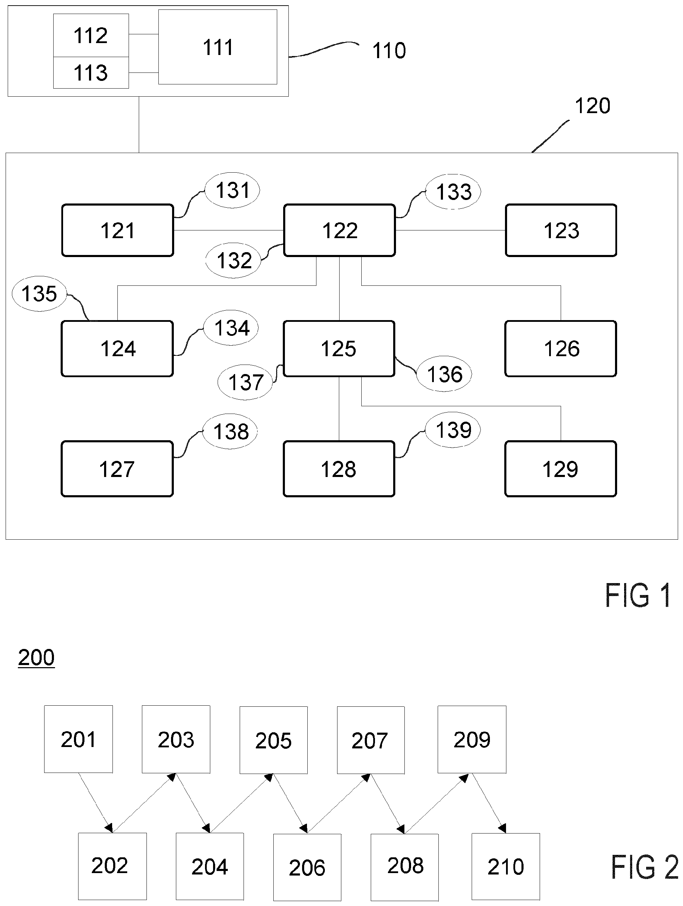

FIG 1 shows schematically a data processing system 110 according to the invention and comprising at least a processor 111, an accessible memory 112, and optionally one or several interfaces 113. For instance, the processor 111 can be connected to a level two cache/bridge, which is connected in turn to a local system bus, e.g. a peripheral component interconnect (PCI) architecture bus. Additionally, a main memory and a graphics adapter can also be connected to the local system bus and part of the data processing system. The graphics adapter may be connected to a display. As known in the art, other peripherals, such as local area network (LAN) / Wide Area Network / Wireless (e.g. WiFi) adapter, may also be connected to the local system bus.

The data processing system 110 is further connected to a system to be monitored, hereafter the monitored system 120. Said monitored system 120 is typically an automation system, e.g. an electrical power distribution system. The monitored system 120 typically comprises several components 121-127. A typical example of an automation system according to the invention is a low voltage power grid. In such a case, the components are for instance power lines between the energy provider(s) and the consumers, feeders that carry three-phase power from a transformer to consumers, nodes (i.e. a junction box, from which feeders and lines go to consumers in a region. A simple definition of a node is where two or more wires meet), transformers (i.e. a passive electrical device that transfers electrical energy from one electrical circuit to another, or multiple circuits), smart meters (i.e. a digital / analog measurement device connected to a data network (i.e., through a gateway). A smart meter has a special kind of self-measurement, called status, which indicates whether it is working properly), a gateway (i.e. a data network component, which aggregates and temporarily stores measurements from several smart meters in a certain area), etc.

According to the present invention, the data processing system 110 is configured for acquiring one or several sets of time series data characterizing an operation of one or several of said components of the monitored system 120. For this purpose, one or several sensors 131-139 are each connected to at least one component of the monitored system 120 and provide each in output, and preferentially in real time, said time series data characterizing a current working of the component they are connected to. The time series data are measures or values of a physical quantity characterizing the working of the component it is connected to and notably acquired during the working of the latter. In particular, some of the sensors 131-139 can be part of the data processing system 120, and some other can be part of the monitored system 120 itself. According to other embodiments, all said sensors are part of the monitored system 120, being for instance used for controlling its operation. According to the present invention, the data processing system 110 is thus configured for acquiring from said sensors said sets of time series data. For instance, the component 121 might be a generator of a power station and the sensors 131 is configured for measuring the power generated by the latter, e.g. in GW. The component 122 might be a primary transformer connected to the generator of the power station, the sensors 132 and 133 measuring respectively an electrical frequency and voltage of said primary transformer. Additionally, a solar plant 123 might be connected to the primary transformer. The primary transformer component 122 might be connected to different substation transformers represented by components 124-126, wherein the sensors 134 and 135 respectively are connected to the substation transformer 124 for measuring a voltage and a temperature of the substation transformer 124, and likewise, the sensors 136 and 137 respectively are connected to the substation transformer 125 for measuring a voltage and a temperature of said substation transformer 125. The components 127 and 128 are for instance devices of end-customers of the electrical power distribution system, wherein the sensor 138 is for instance a flowmeter configured for measuring an electrical flow at a switch represented by component 127, and component 128 is for instance a battery, wherein the sensor 139 is configured for measuring the battery capacity and voltage. Preferentially, for each component of the automation system 120, at least one sensor is configured for acquiring or measuring a physical quantity characterizing the working of said component. Preferentially, the data processing system 110, is connected to said sensors 131-139, in particular to each of them, e.g. via a first interface.

As shown in Fig. 1, the components of the monitored system 120 typically form an interconnected network wherein the operating condition of one of said components may impact the operation of one or several other components. Due to the complexity of such monitored system, it becomes very difficult to find the source of a failure. The present invention proposes a solution that facilitates finding the root cause of such a failure by analyzing said time series data measured by the different sensors 131-139.

Figure 2 illustrates a flowchart 200 of a method for automatically identifying a root cause of an event detected for the monitored system. Such method can be performed, for example, by the data processing system 110 of Figure 1 described above, but the "system" in the process below can be any apparatus configured to perform a process as described. The method according to the invention will be now described in more details in connection with Figure 2.

At step 201, the system acquires or receives, notably via said first interface, and preferentially in real time, at least one set of said time series data. As explained earlier, the data comprised within said set are physical data (i.e. represent a physical quantity) measured and acquired by at least one sensor in function of the time for one or several of said components 121-129 of the monitored system 120. Said data are for instance temperature data, current data, voltage data, mass data, intensity data, length data, speed data, flow data, frequency measurement, etc. In particular, multiple sets of time series data might be acquired, notably via said first interface, each set comprising for instance time series data acquired by a different sensor, and representing thus a different temporal evolution of a physical quantity (e.g. temperature measurement in function of the time for one set, and current in function of the time for another set). Among said multiple sets, different sets might represent measurement of a same physical quantity (e.g. two or several sets represent a temporal evolution of the values obtained for a same physical quantity, e.g. voltage measured at two different points in an electrical circuit or for two different components of the monitored system) or of a different physical quantity (e.g. one set represents current measurements and another set temperature measurements for a same or a different component of the monitored system). Optionally, all sets are measurements of the same physical quantity (e.g. all sets represent temperature or voltage measurements acquired for one or several components of the monitored system 120, for instance at different locations within the monitored system). In particular, all time series data are data measured in function of the time with respect to a same clock, or are synchronized with respect to a same clock, to enable comparison between the data.

According to the present invention, each set of time series data is associated to technical metadata configured for providing physical information about the time series data. In particular, said technical metadata comprises at least:
- the type of measured physical quantity (e.g. tension U, current I, transferred heat Q, pressure P, temperature T, etc.);
- the component type for which said set of time series data has been acquired or measured (e.g. a transformer, a consumer point, etc.);
- a location of the sensor which acquired or measured said set of time series data with respect to a topology of the monitored system. Said topology is configured for describing an architecture of the monitored system, i.e. how are components connected, e.g. electrically or communicatively or physically connected, with each other, where are the measurement point of the sensors, etc., such architecture enabling to physically build the monitored system.

Optionally, said technical metadata also comprises one or several timestamps indicating for instance a start and/or an end of the measured physical data.

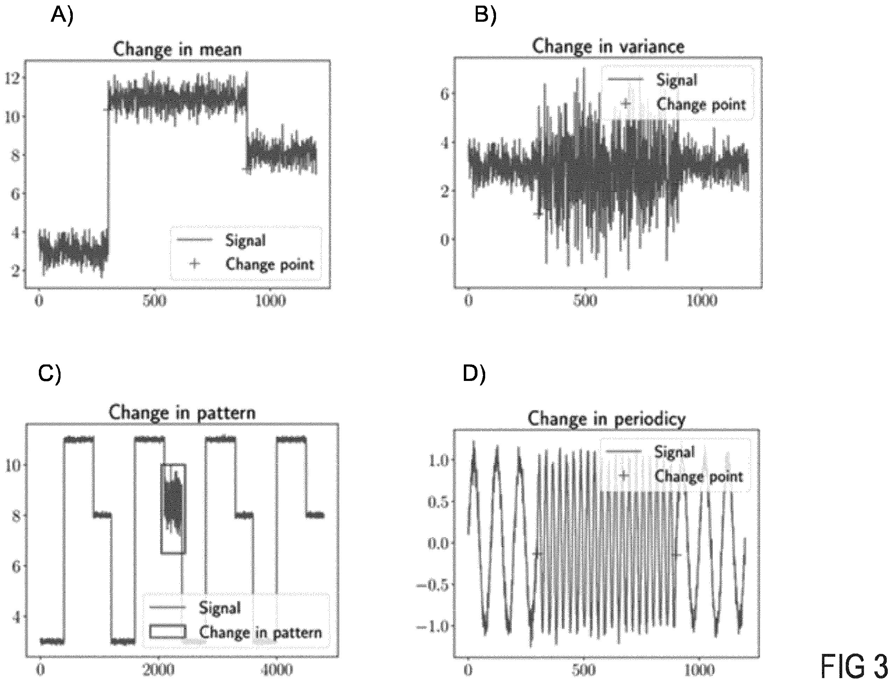

At step 202, the system is configured for feeding each set of time series data into a main detection algorithm. Said main detection algorithm is preferentially stored in the memory 112 of the data processing system 110. According to the present invention, the main detection algorithm comprises an ensemble of N secondary detection algorithms, wherein each secondary detection algorithm A_i, i=1,...,N, is configured for using a statistical criterion C_i (e.g. based on mean value, covariance, variance, etc.) for detecting an event in the time series data received as input. The secondary detection algorithms are preferentially configured for using each a different statistical criterion for detecting said event. Said event is for instance a value measured for said physical quantity that exceeds during some period of time a threshold determined in function of a mean value measured for said physical quantity. In other words, said event represents a change in the statistical features of time series data received as input. Such changes in statistical values/properties are illustrated in Figure 3, wherein the graph A shows an change in a mean for a measured physical quantity in function of the time, graph B shows a change in variance for another measured physical quantity in function of the time, graph C presents a change in a pattern of a physical quantity measured in function of the time, and graph D shows a change of a periodicity of a physical quantity in function of the time. Temporal change points (illustrated by a cross in Fig. 3) might be automatically calculated by the system according to the invention for identifying the temporal start and end of said change, and then associated to the corresponding set of time series data as timestamp metadata.

According to the present invention and in particular, at least one secondary detection algorithm A_i is a dissimilar change point detection algorithm configured for using a dissimilar statistical criterion to detect changes (i.e. events) in the time series data. Preferentially, for a same sensor, the method comprises an automatic splitting procedure configured for temporally splitting time series data outputted by said same sensor into temporally overlapping successive intervals of time series data, wherein each set received or acquired by the system is one of said intervals of time series data, each temporally successive interval of time series data being then thus successively fed into said main detection algorithm and received as input by each of said secondary detection algorithms as explained above.

At step 203, the main detection algorithm is configured for outputting, for each set received by the latter as input, a statistical label SL configured for encoding for each of said secondary detection algorithms A_i a detection result R_i obtained by the concerned secondary detection algorithm A_i. Preferentially, a binary encoding method is used, wherein each secondary detection algorithm is configured for outputting a binary result, i.e. R_i = 0 or 1, said statistical label SL being preferentially a binary array of ones and zeroes representing notably a concatenation of the binary results, e.g. SL = R_1 R_2 R_3 R_4 R 5 = 1 0 0 0 1, wherein a value "1", resp. "zero", at a position "i" indicates that the secondary detection algorithm A_i identified an event, resp. did not identify an event, within the time series data of the set received as input. In other words, times series data acquired during a period of time during which an event occurred may show statistical properties/characteristics each represented by or associated to a binary result R_i (e.g. a variance, mean, covariance, etc. higher/lower than predefined values, etc.) which are characteristic of/specific to said event (For instance, let's say that R_1 represents or relates to a mean change, R_2 a variance change, R_3 a frequency change, R_4 a mean increase, R_5 a variance increase, R_6 a frequency increase. In such a case, if the statistical label created from the concatenation of the values of R_1 to R_6 is 1-1-0-0-0-0 (i.e. R_1=1 - R_2=1 - R_3=0 -R_4=0 - R_5=0 - R_6=0), then it encodes a decrease in mean and variance which might be associated, when following the method explained below, to a causal factor like a medium to long term voltage drop, while another statistical label 1-1-0-1-1-0 encoding an increase in mean and variance will be associated by the system according to the invention to a medium to long term voltage overshoot. The statistical label makes it thus possible to identify the causal factors of an event.

At step 204, the system is configured for automatically determining whether the statistical label SL encodes at least one detection of an event, and in the affirmative, it is configured for automatically generating a first query based on, i.e. that is a function of, the statistical label SL and the technical metadata, wherein said first query is configured for searching a causal factor for the detected event. For instance, the system is configured for reading the series of ones and zeroes of the statistical label SL and for generating said first query which is configured for searching for causal factors that (i) satisfy/verify the statistical change(s) expressed by the binary results R_i comprised within the statistical label SL and whose value, e.g. "1", indicates a detection of an event and (ii) satisfy also the metadata associated to the acquired set of time series data that gave rise to said statistical label SL. According to the present invention, the technical metadata provides technical information related to the time series data of the set. Said technical information is for instance the type of physical quantity of said time series data, an identification and/or information about the sensor which acquired said time series data, a location within the monitored system, a time of acquisition, etc. Said first query, and generally any query according to the present invention, is preferentially written in SPARQL language or any other graph database query language, like Cypher (Neo4j) or Graph Query Language (GQL). A first query according to the invention can be written as follows:

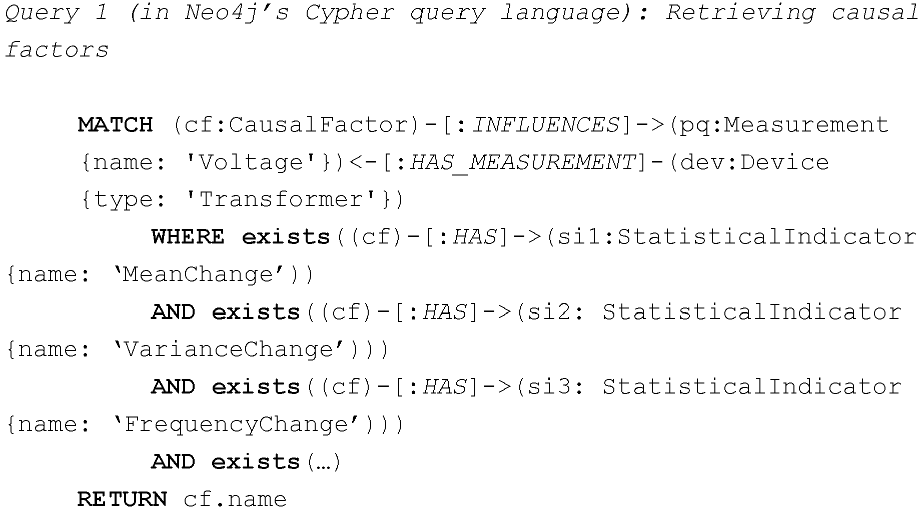

In particular, predefined query templates might be stored in a memory and used for the automatic generation of queries according to the invention.

At step 205, the system is configured for using said first query for automatically performing a first search in a semantic database in order to determine a list Q1_CF of causal factors for said event, wherein said semantic database is configured for describing the monitored system. In particular, said semantic database is, or might be represented by, a knowledge graph KG comprising a set of nodes and edges, wherein said nodes represent features of the monitored system (i.e. they are entities that are or that characterize real-world objects) and of the secondary detection algorithms (i.e. they are entities that represent or characterize the main detection algorithm), and wherein said edges represent the relationships, e.g. semantically-interrelated relations, between the nodes, each edge being configured for connecting two nodes of the semantic database. In other words, said semantic database is configured for or capable of representing or modeling said monitored system (i.e. a physical real object) and the detection algorithm used for detecting events from signals (i.e. said time series data) acquired from the monitored system. The semantic database may classify the nodes in different categories and/or types, for instance system components, system behaviors, system failures, physical quantity, predefined values, time of execution, etc., as known in the art.

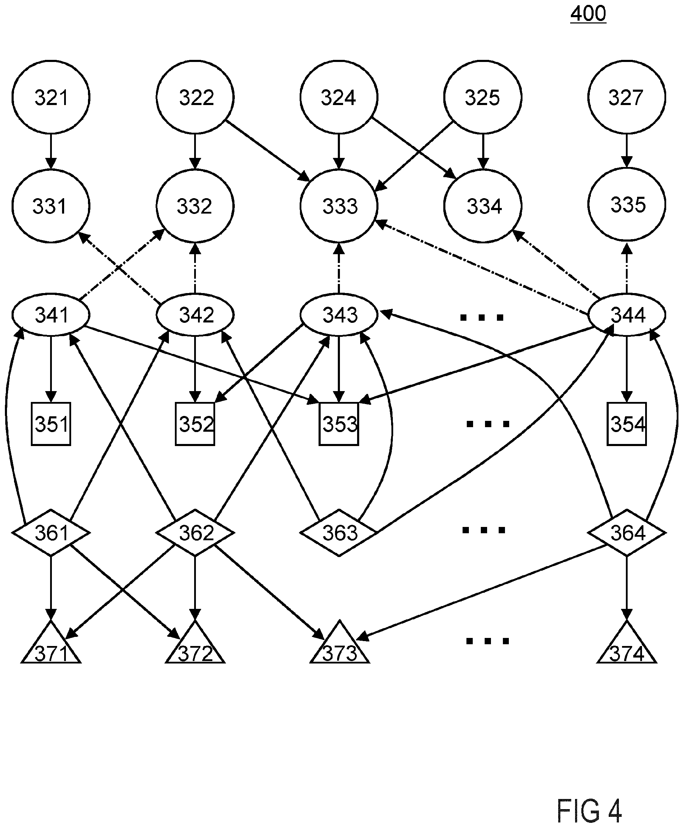

Typically, the semantic database is configured for describing a technical field or domain to which the monitored system 120 (e.g. smart grid systems, high voltage systems, etc.) belongs to. It is preferentially a domain-specific knowledge graph 400 and is illustrated in Figure 4. Advantageously, this makes it possible to use said semantic database for searching the root cause of events detected for different monitored systems as long as they belong to said technical field or domain.

According to the present invention and as illustrated by the preferred embodiment of Fig. 4, the semantic database or knowledge graph KG 400 comprises at least:
- a set of nodes 321, 322, 324, 325, 327, representing each a different component of the monitored system 120 (e.g. transformer device, feeder, line, consumer device, energy provider device, etc.). For instance, node 321 represents the component 121 (generator), the node 322 represents the component 122 (primary transformer), the node 324 the component 124 (a substation transformer), the node 325 the component 125 (another substation transformer) and the node 327 the component 127 (electrical switch);
- a set of nodes 331-335 representing each a different type of physical quantity that can be measured for the monitored system 120. For instance, node 331 represents a power measurement, node 332 a frequency measurement, node 333 a voltage measurement, node 334 a temperature measurement, and node 335 an electrical flow measurement. Of course, other physical quantities might be represented depending on the physical quantities that are measured for the monitored system, like current measurement, capacity measurement, thermal energy measurement, thermal transfer measurement, flow measurement, speed measurement, etc.);
- a set of N nodes N_i, wherein the node N_i represents or is associated to the detection of an event by the secondary algorithm A_i. Said set of N nodes N_i is represented by the square nodes 351-354 in Fig. 4. They represent for instance the detection of a change of a mean in the statistical label, the change in a variance, etc.;

- a set of nodes 341-344 representing each a different causal factor capable of technically influencing values of one of said physical quantity when measured for one of said components. The causal factor is a factor that may have caused the event detected and identified in the statistical label. For instance, causal factors might be a short-, medium-, or long-term voltage drop or overshoot. One causal factor can be associated to one or a plurality of statistical changes in statistical properties represented by the N nodes N_i;
- a set of nodes 361-364 representing each a different root cause for the detected event. E.g. a root cause can be a power grid congestion or electrical overload;
- a set of edges, represented by arrows in Fig. 4, connecting the above-mentioned nodes and defining relationships between the latter. Said edges are preferentially added manually to the semantic database by domain experts. For instance, arrows with a continuous line mean "has", while arrows with a dash-dotted line mean "influences". For instance, the causal factor node 343 influences the voltage measurement represented by node 333 and has a change in the mean and a change in the variance illustrated respectively for instance by square nodes 352 and 353 as detection criteria, and can be a causal factor for the root cause nodes 362, 363, and 364.

Of course, the semantic database or knowledge graph KG 400 may comprise additional information or conditions for improving the identification of the source of a detected event. For instance, nodes 371-374 (see triangular nodes in Fig. 4) represent each an additional physical condition that must be satisfied by a root cause (node). Preferentially, the system is configured for checking said additional physical conditions using the acquired time series data rather the statistical labels or the knowledge graph. In particular, standards or norms defining one or several characteristics of the acquired time series data might be used for defining such additional physical condition. For instance, in the context of a power grid, the norm DIN EN 50160:2020-11 specifies which types of voltage disturbance events can occur in low and medium-voltage power grids, including short, medium, and long-term voltage drops or overshoots. These events can then be monitored via the acquisition of said time series data in order to react to congestions and other local and global disturbances in the low and medium voltage in order to secure a reliable electricity supply. For example, to qualify as a power grid congestion root cause, the voltage drop or overshoot must exceed a nominal value of a measured physical quantity by a certain threshold (e.g., 10%; first additional physical condition) for a number of times (e.g., > 3 times; second additional physical condition) for a specified duration (e.g., 30 minutes; third additional physical condition), depending on the type of congestion. Hence, to validate the assumption of a congestion as the root cause of an event, the system must check whether said first, second and third additional physical conditions associated to the root cause have been satisfied by the time series data (e.g. the overshoot or drop must exceed 10% of the nominal voltage value (e.g., 230 V in continental Europe) for a 30 minutes duration). Checking whether said additional physical conditions are satisfied by the time series data is preferentially performed by the system using raw time series data and may comprise threshold validation or duration (e.g., for how long has the mean value increased?).

According to said semantic database or knowledge graph 400 and preferentially, each causal factor node 341-344 is directly connected to at least one physical quantity type node 331-335, each node N_i 351-354 is directly connected to one or several causal factor nodes 341-344, some or preferentially each component node 321, 322, 324, 325, 327 is directly connected to at least one physical quantity type node 331-335, and each root cause node 361-364 is directly connected to one or several causal factor nodes 341-344, and optionally to one or several additional physical condition node 371-374.

At step 206, the system is configured for using said list Q1_CF for creating a second query configured for determining a list Q2_RC of root causes for the detected event, wherein said second query is a function of the list Q1_CF and is configured for identifying or finding in said semantic database any root cause that relates (i.e. is connected via an edge) to at least one of the causal factors of said list Q1_CF. An example of a second query is:

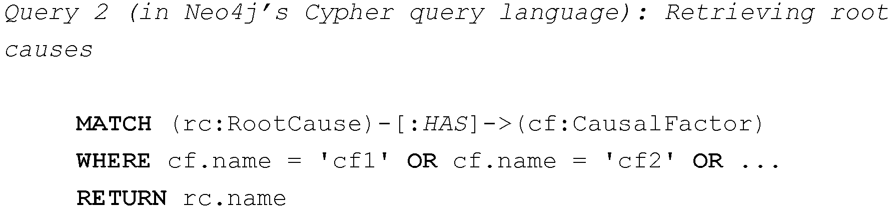

In the second query, the causal factors play the role of effects of a root cause. Preferentially, a root cause must have at least a predefined number of matching effects to be considered as such (i.e., to be suggested by the system as a root cause). According to the present invention, to ensure that the system finds at least one potential root cause for a given set of causal factors identified through the first query, the second query 2 uses an "OR" operator to search for root causes that have any of the causal factors.

At step 207, the system uses said second query for automatically performing a second search in the semantic database in order to determine said list Q2_RC of root causes RC_j for said detected event, wherein j=1, ... , M, with M being the number of found root causes when performing the second search.

At step 208 and for each root cause RC_j of said list Q2_RC, the system is configured for automatically finding, in said semantic database and by executing a third query, all causal factors associated (i.e. directly connected) to the concerned root cause, and listing for each root cause RC_j of the list Q2_RC the found causal factors in a list Q3_RC_j. The third query might be written as follows:

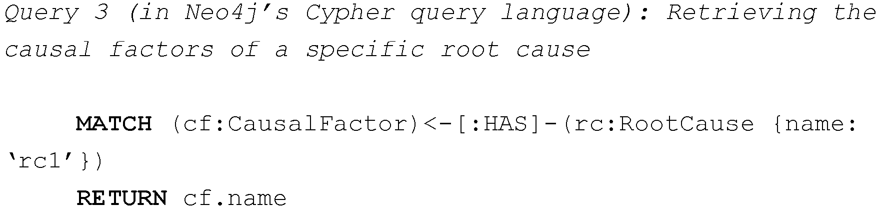

At step 209, the system is configured for automatically determining for each root cause RC_j the number of causal factors comprised within the list Q3_RC_j that are also comprised within the list Q1_CF and ranking the root causes RC_j according to said determined numbers, wherein the higher the number, the higher the rank.

Optionally, the method comprises automatically determining a confidence level for each of said root causes RC_j, wherein said confidence level is equal to the absolute difference between the number of causal factors comprised within the list Q1_CF and the number of causal factors comprised within the list Q3_RC_j, whereby a smaller absolute difference, a higher confidence level. Preferentially, said confidence level might be used as a weighting for reordering the previously ranked root causes. For instance, for each root cause RC_j, the rank of the concerned root cause RC_j might be multiplied by 1/confidence level resulting in a value based on the confidence level, and then said root causes RC_j might be ranked again from the smallest of said values to the highest. A reordering of the root causes RC_j resulting in a ranking that takes into account the confidence level might thus be obtained. Optionally, said additional physical conditions might be taken into account for reordering the root causes RC_j or refining said ordering. Said additional physical conditions might be taken into account as an alternative to the confidence level, or additionally to the confidence level for reordering the root causes RC_j. These additional physical conditions are physical criteria that have to be satisfied by the acquired time series data in order to validate or invalidate the rank of a root cause. For instance, if the physical conditions defined for the root cause RC_j are satisfied, then the current rank of the root cause RC_j is maintained, otherwise, the root cause is withdrawn from the set of ranked root causes RC_j, and the remaining root causes are preferentially reordered accordingly, i.e. as a succession of root causes starting from a first root cause (having the highest ranking and for which the respective time series satisfied said physical criteria) to a last root cause (having the lowest ranking and for which the time series satisfied said physical criteria).

In particular, the system might be configured for automatically performing a causality test, e.g. the Granger causality test, in order to validate a root cause of a detected event, or in other words, in order to filter the list of ranked root causes. Preferentially, each root cause RC_j that is or remains (i.e. after reordering as previously explained) in the set of ranked root causes might be tested by means of said causality test, and only root causes that satisfy the causality test are maintained in the set of ranked root causes, the other, i.e. the root causes RC_j which do not satisfy said causality test, being withdrawn from said set. Afterwards, a reordering can take place again for obtaining a final set of ranked root causes. Preferentially, for implementing said causality test, the semantic database is configured for associating to each root cause one or several sensors. For performing said causality test, the system is then configured for testing the data of the set of time series data for which the root cause has to be determined (i.e. the set of time series data under investigation and for which an event has been detected) and which has been acquired by one of the sensors, to time series data acquired by said one or several sensors associated to the root cause to be tested. The output of the causality test is a level of causality, and the system is configured for withdrawing a root cause from the set of ranked root causes if said causality level is lower than a causality level threshold. Said time series data acquired by said one or several sensors associated to the root cause to be tested are automatically chosen by the system, e.g. by choosing time series data belonging to a time interval defined in function of the time at which the detected event took place, extending for instance from time series data acquired before the detected event until time series data acquired after said detected event. The temporal periods covered by the time series data acquired respectively before and after the detected event might differ in that the temporal period covering time series data acquired after the detected event is shorter than (e.g. 1/5 of) the temporal period covering the time series data acquired before the detected event.

For instance, let's consider a root cause (hereafter the tested root cause) be a meteorological event, said tested root cause being thus associated to one or several sensors configured for acquiring meteorological data, like a global radiation GL, a 1-hour precipitation sum RR, an air temperature T2M, a dew point temperature TD2M, a wind speed in eastward direction UU, a wind speed in northward direction VV. Said tested root cause might be defined as being a situation of extremely high global radiation or wind speed; a sudden drop in temperature or extreme precipitation; or a combination thereof. In order to determine whether the tested root cause can be validated or not, the system will perform said causality test, such as the Granger test, between time series of meteorological data and the time series data of the measured physical quantities which gave rise to the detection of the event, e.g. a power grid event, for the monitored system. Then, the system is configured for validating the tested root cause if a p-value of the Granger test (or another causality test) is lower than the causality level (e.g., 0.05 or 0.01). If this is true, then the system is configured for keeping said root cause in the set of ranked root causes, which means that said meteorological event can be regarded as a or the root cause of the power grid event.

Preferentially, the time series data used for performing the causality test might be time series data acquired by the system according to the invention, or time series data from another system. For instance, regarding the previous example related to the root cause being a meteorological event, the system according to the invention may have access to an online historical meteorological database for performing the Granger test or another causality test for time series data. Preferentially, the system is configured for performing the causality test in near real-time (e.g., a few seconds). The causality test is performed on said time interval (also called test segment) of time series data that contains the detected event (e.g., one or a plurality of detected change points) as well as said time series data covering a period of time taking place before the detected event until the latter (e.g., a few minutes, hours, or days before a change point occurred). And preferentially, said test segment may also contain time series data covering a period of time that takes place after the detected event (e.g., a few minutes or hours after the occurrence of said change point). Preferentially, the system is configured for automatically fetching the time series data used for the causality test, e.g. said meteorological data acquired from said online database, for an exact same period that corresponds to said test segment and for using a same temporal resolution for all time series data used for the causality test. In particular, if one of the time series data used for the causality test differs from the temporal resolution of another one of said time series data used for the causality test, then the time series data having a coarser-grained temporal resolution is automatically enriched by the system (e.g., using interpolation) to get the same temporal resolution as the finer-grained time series data.

Optionally, the method comprises automatically launching a test procedure configured for automatically and successively testing the root causes from highest ranked root cause to lowest ranked root cause, the test procedure starting from the highest ranked root cause and stopping as soon as the test procedure provides a positive result, wherein said test procedure is configured for automatically testing one or several monitored system components associated to said root cause in the semantic database, e.g. directly or indirectly connected in said semantic graph to the root cause under investigation through said test procedure, preferentially testing first directly connected component and then indirectly connected component preferentially according to a degree of relationship, the closest component with respect to a number of edges required for connecting said component to the root cause being tested first. Said test procedure typically comprises measuring by means of said sensors and for each of said components associated to the root cause additional time series data, preferentially according to a test procedure template specifically design for testing the concerned component, each test procedure of a component resulting either in a positive result meaning that a failure/fault/malfunction has been found, in which case, the test procedure stops, or in a negative result, meaning that no failure/fault/malfunction has been found, in which case, if all components related to the root cause under investigation have been tested, then the test procedure continues with the next root cause in said ranking until a positive result is obtained for a component, and for automatically ranking at the highest rank the root cause for which a component provided a positive result. In particular, said test procedure is configured for using test criteria that are specific to each of the root causes RC_j. If no positive result is obtained after testing all said ranked root causes, the system is configured for providing in output a message informing that the test procedure failed.

At step 210, the system is configured for automatically providing, via a second interface, an identification result for the identification of the root cause of the detected event, wherein said identification result comprises an identifier of the root cause with the higher rank, and optionally an identifier of said component for which a positive result has been obtained. Optionally, said identification result might be automatically processed by a Natural Language Convertor endowed with reasoning capabilities and configured for reporting, in natural language, an explanation of the event and its root cause.

For instance, based on the statistical label SL, the list Q1_CF of matching causal factors, and the validated root cause(s) identified by the system and ranked in said set of ranked root causes, the system is configured for automatically generating an explanation in natural language for a user, using for instance a ML model configured for understanding and generating natural language, such as the GPT-3 model collection from OpenAI. Preferentially, the ML model is trained using a JSON input-output pair of the form (using text-davinci-002):
In: { "date": "A few minutes ago", "physical quantity": "voltage", "location": ["TS08", "TS04"], "causal factors": ["medium-term voltage overshoot", "long-term voltage overshoot"], "statistical indicators": ["change in mean", "change in variance", "increase in mean", "increase in variance"], "validating conditions": ["more than 10%", "several hours"], "confidence": "high", "root cause": "congestion", "languages": [ "english" ] }
Out: { "english": "A few minutes ago, a medium to long-term voltage overshoot was observed at the building fields TS08 and TS04. This event is likely caused by a change and increase in the mean and variance of the measured voltage by more than 10%, several hours. The event was assessed to be significant with a high confidence level. The root cause of the event appears to be a grid congestion at the concerned location(s)." }

This one example suffices to teach the GPT-3 or a similar ML model (e.g., any autoregressive language model that uses deep learning and a transformer architecture to produce human-like text) how to explain a structured data set (i.e., the input) in a human-readable way by embedding the key data (e.g. the identifier of the root cause with the higher rank, and/or the identifier of said component for which a positive result has been obtained, and/or the causal factors comprised within the list Q1_CF, and/or the list of ranked root cause(s), and/or the statistical results R_i comprised in the statistical label) into natural language phrases. The system is thus preferentially configured for automatically generating such a phrase for explaining a context of a detected event and providing a user information about said detected event.

To conclude, the present invention proposes a completely new approach for finding the root cause of a detected event. Indeed, as opposed to known in the art techniques in which very specific conditions are checked from the very beginning using raw time series data to determine if some detected event is caused for instance by a congestion or another known or unknown root cause, the proposed solution follows a new approach that comprises in a first step a determination of all potential root causes, and then, in a second step, a validation of only the potential root causes that match their exact conditions (in terms of causal factors and optionally additional physical conditions/causality test/confidence). This has the advantage that the system will suggest root causes that are not necessarily exactly matching known conditions as defined by domain-specific norms but come close to those conditions. This way additional root causes can be added to the knowledge graph and existing ones can be nuanced, thus making the knowledge base more comprehensive and the suggestions of the system more accurate over time.

## Claims

1. A method for automatically identifying a root cause of an event detected for a monitored system (120), the method comprising:
- acquiring (201), via a first interface, at least one set of time series data representing a temporal evolution of a physical quantity value measured for one or several components (121-129) of the monitored system (120);
- feeding (202) each set of time series data into a main detection algorithm comprising an ensemble of N secondary detection algorithms, wherein each secondary detection algorithm A_i, i=1,...,N, is configured for using a statistical criterion C_i for detecting an event in the time series data received as input;
- outputting (203), by said main detection algorithm and for each set received as input by the latter, a statistical label configured for encoding for each of said secondary detection algorithms A_i a detection result R_i obtained by the concerned secondary detection algorithm A_i for the set received as input;
- for each statistical label, automatically determining (204) whether the latter encodes at least one detection of an event, and in the affirmative, automatically generating a first query based on the statistical label and technical metadata associated to the set of time series at the origin of said statistical label, wherein said first query is configured for searching one or several causal factors for the detected event;
- using said first query for automatically performing (205) a first search in a semantic database in order to determine a list Q1_CF of causal factors for said detected event, wherein said semantic database is configured for describing the monitored system;
- using (206) said list Q1_CF for creating a second query configured for determining a list Q2_RC of root causes for the detected event, wherein said second query is a function of the list Q1_CF and is configured for finding in said semantic database any root cause that relates to at least one of the causal factors of said list Q1_CF;
- using (207) said second query for automatically performing a second search in the semantic database in order to determine said list Q2_RC of root causes RC_j for said detected event, wherein j=1,...,M, with M being the number of found root causes when performing the second search;
- for each root cause RC_j of said list Q2_RC, automatically finding (208), in said semantic database and by executing a third query, all causal factors associated to the root cause RC_j, and listing for each root cause RC_j of the list Q2_RC the found causal factors in a list Q3_RC_j;
- automatically determining (209) for each root cause RC_j the number of causal factors comprised within the list Q3_RC_j that are also comprised within the list Q1_CF, and ranking the root causes RC_j according to the determined numbers, wherein the higher the number, the higher the rank;
- automatically providing (210), via a second interface, an identification result for the identification of the root cause of the detected event, wherein said identification result comprises an identifier of the root cause with the higher rank, and optionally an identifier of said component for which a positive result has been obtained.

2. The method of claim 1, wherein said technical metadata comprises at least:
- the type of measured physical quantity;
- the component type for which the set of time series data has been acquired or measured;
- a location of a sensor (131-139) which acquired or measured said set of time series data with respect to a topology of the monitored system (120).

3. The method of claim 1 or 2, wherein the semantic database is a knowledge graph (400) comprising:
- a set of nodes (321, 322, 324, 325, 327) representing each a different component (121, 122, 124, 125, 127) of the monitored system (120);
- a set of nodes (331-335) representing each a different type of physical quantity that can be measured for the monitored system (120);
- a set of N nodes N_i (351-354), wherein the node N_i represents the detection of an event by the secondary algorithm A_i;
- a set of nodes (341-344) representing each a different causal factor capable of technically influencing values of one of said physical quantities when measured for one of said components (121, 122, 124, 125, 127);
- a set of nodes (361-364) representing each a different root cause for the detected event;
- a set of edges connecting the above-mentioned nodes and defining relationships between the latter.

4. The method of any of the preceding claims, comprising automatically determining a confidence level for each of said root causes RC_j, wherein said confidence level is equal to the absolute difference between the number of causal factors comprised within the list Q1_CF and the number of causal factors comprised within the list Q3_RC_j, whereby a smaller absolute difference, a higher confidence level.

5. The method of claim 4, comprising using the confidence level as a weighting for reordering the previously ranked root causes.

6. The method of any of the preceding claims, comprising determining for each root cause RC_j whether the time series that led to said root cause RC_j satisfies one or several physical criteria predefined for said root cause, and automatically withdrawing from said ranking any root cause RC_j that does not satisfy at least one of said one or several physical criteria.

7. The method of any of the preceding claims, comprising automatically performing a causality test for filtering the ranked root causes.

8. The method of any of the preceding claims, comprising automatically launching a test procedure configured for automatically and successively testing the root causes RC_j from highest ranked root cause to lowest ranked root cause, wherein said test procedure is configured for using test criteria that are specific to each of the root causes RC_j.

9. The method of claim 8, wherein the test procedure is configured for starting from the highest ranked root cause and stopping as soon as the test procedure provides a positive result, wherein said test procedure is configured for automatically testing one or several monitored system components (121-129) associated to said root cause in the semantic database.

10. The method of claim 8 or 9, wherein said test procedure comprises measuring by means of said sensors (131-139) additional time series data for each of said components (121-129) associated to the root cause, each test procedure of a component (121-129) resulting either in said positive result meaning that a failure/fault/ malfunction has been found, in which case, the test procedure stops, or in a negative result, meaning that no failure/fault /malfunction has been found, in which case, if all components (121-129) associated to the root cause under investigation have been tested, then the test procedure continues with the next root cause in said ranking until a positive result is obtained for a component (121-129), and for automatically ranking at the highest rank the root cause for which a component (121-129) provided said positive result.

11. The method of any of the preceding claims, comprising automatically processing said identification result by a Natural Language Convertor endowed with reasoning capabilities and configured for reporting, in natural language, an explanation of the detected event and its root cause.

12. A data processing system (110) for automatically identifying a root cause of an event for a monitored system (120), wherein said data processing system (110) comprises a processor (111) and an accessible memory (112) and is configured for being connectable to one or several sensors (131-139) and/or components (121-129) of the monitored system (120) for acquiring times series data representing a temporal evolution of a physical quantity value measured for said one or several components (121-129) of the monitored system (120), the data processing system (110) comprising a first interface and a second interface, and being configured for carrying out the steps of the method according to one of the claims 1 to 11.

13. A non-transitory computer readable medium, encoded with executable instructions, wherein an execution of said executable instructions causes one or more data processing systems (110) to perform the method according to one of the claims 1 to 11.

## Patentansprüche

1. Verfahren zum automatischen Identifizieren einer Root-Ursache eines Ereignisses, das für ein überwachtes System (120) detektiert wird, wobei das Verfahren Folgendes umfasst:
- Erfassen (201), über eine erste Schnittstelle, mindestens eines Satzes von Zeitreihendaten, die eine zeitliche Entwicklung eines für eine oder mehrere Komponenten (121-129) des überwachten Systems (120) gemessenen Werts einer physikalischen Größe repräsentieren;
- Einspeisen (202) jedes Satzes von Zeitreihendaten in einen Hauptdetektionsalgorithmus, der ein Ensemble von N sekundären Detektionsalgorithmen umfasst, wobei jeder sekundäre Detektionsalgorithmus A_i, i=1,...,N zum Verwenden eines statistischen Kriteriums C_i zum Detektieren eines Ereignisses in den als Eingabe empfangenen Zeitreihendaten konfiguriert ist;
- Ausgeben (203), durch den Hauptdetektionsalgorithmus und für jeden Satz, der durch diesen als Eingabe empfangen wird, eines statistischen Labels, das zum Codieren eines Detektionsergebnisses R_i für jeden der sekundären Detektionsalgorithmen A_i konfiguriert ist, das durch den betreffenden sekundären Detektionsalgorithmus A_i für den als Eingabe empfangenen Satz erhalten wird;
- für jedes statistische Label, automatisches Bestimmen (204), ob dieses mindestens eine Detektion eines Ereignisses codiert, und wenn bejahend, automatisches Erzeugen einer ersten Abfrage basierend auf dem statistischen Label und technischen Metadaten, die dem Satz von Zeitreihen am Ursprung des statistischen Labels zugeordnet sind, wobei die erste Abfrage zum Suchen eines oder mehrerer kausaler Faktoren für das detektierte Ereignis konfiguriert ist;
- Verwenden der ersten Abfrage zum automatischen Durchführen (205) einer ersten Suche in einer semantischen Datenbank, um eine Liste Q1_CF von kausalen Faktoren für das detektierte Ereignis zu bestimmen, wobei die semantische Datenbank zum Beschreiben des überwachten Systems konfiguriert ist;
- Verwenden (206) der Liste Q1_CF zum Erstellen einer zweiten Abfrage, die zum Bestimmen einer Liste Q2_RC von Root-Ursachen für das detektierte Ereignis konfiguriert ist, wobei die zweite Abfrage eine Funktion der Liste Q1_CF ist und zum Finden einer Root-Ursache in der semantischen Datenbank konfiguriert ist, die sich auf mindestens einen der kausalen Faktoren der Liste Q1_CF bezieht;
- Verwenden (207) der zweiten Abfrage zum automatischen Durchführen einer zweiten Suche in der semantischen Datenbank, um die Liste Q2_RC der Root-Ursachen RC_j für das detektierte Ereignis zu bestimmen, wobei j=1,...,M, wobei M die Anzahl der gefundenen Root-Ursachen beim Durchführen der zweiten Suche ist;
- für jede Root-Ursache RC_j der Liste Q2_RC, automatisches Finden (208) aller der Root-Ursache RC_j zugeordneten kausalen Faktoren in der semantischen Datenbank und durch Ausführen einer dritten Abfrage und Auflisten der gefundenen kausalen Faktoren in einer Liste Q3_RC_j für jede Root-Ursache RC_j der Liste Q2_RC;
- automatisches Bestimmen (209) für jede Root-Ursache RC_j der Anzahl von kausalen Faktoren, die in der Liste Q3_RC_j enthalten sind, die auch in der Liste Q1_CF enthalten sind, und Einstufen der Root-Ursachen RC_j gemäß den bestimmten Anzahlen, wobei je höher die Anzahl, desto höher der Rang;
- automatisches Bereitstellen (210), über eine zweite Schnittstelle, eines Identifikationsergebnisses für die Identifikation der Root-Ursache des detektierten Ereignisses, wobei das Identifikationsergebnis einen Identifikator der Root-Ursache mit dem höheren Rang und optional einen Identifikator der Komponente umfasst, für die ein positives Ergebnis erhalten wurde.

2. Verfahren nach Anspruch 1, wobei die technischen Metadaten mindestens Folgendes umfassen:
- die Art der gemessenen physikalischen Größe;
- die Komponentenart, für die der Satz von Zeitreihendaten erfasst oder gemessen wurde;
- einen Ort eines Sensors (131-139), der den Satz von Zeitreihendaten erfasst oder gemessen hat, in Bezug auf eine Topologie des überwachten Systems (120).

3. Verfahren nach Anspruch 1 oder 2, wobei die semantische Datenbank ein Wissensgraph (400) ist, der Folgendes umfasst:
- einen Satz von Knoten (321, 322, 324, 325, 327), die jeweils eine andere Komponente (121, 122, 124, 125, 127) des überwachten Systems (120) repräsentieren;
- einen Satz von Knoten (331-335), die jeweils eine andere Art von physikalischer Größe repräsentieren, die für das überwachte System (120) gemessen werden kann;
- einen Satz von N Knoten N_i (351-354), wobei der Knoten N_i die Detektion eines Ereignisses durch den sekundären Algorithmus A_i repräsentiert;
- einen Satz von Knoten (341-344), die jeweils einen anderen kausalen Faktor repräsentieren, der in der Lage ist, die Werte einer der physikalischen Größen technisch zu beeinflussen, wenn sie für eine der Komponenten (121, 122, 124, 125, 127) gemessen werden;
- einen Satz von Knoten (361-364), die jeweils eine andere Root-Ursache für das detektierte Ereignis repräsentieren;
- einen Satz von Kanten, die die oben genannten Knoten verbinden und Beziehungen zwischen diesen definieren.

4. Verfahren nach einem der vorhergehenden Ansprüche, das automatisches Bestimmen eines Konfidenzniveaus für jede der Root-Ursachen RC_j umfasst, wobei das Konfidenzniveau gleich der absoluten Differenz zwischen der Anzahl von kausalen Faktoren, die in der Liste Q1_CF umfasst sind, und der Anzahl von kausalen Faktoren ist, die in der Liste Q3_RC_j umfasst sind, wobei eine kleinere absolute Differenz ein höheres Konfidenzniveau ist.

5. Verfahren nach Anspruch 4, das Verwenden des Konfidenzniveaus als eine Gewichtung zum Neuordnen der zuvor eingestuften Root-Ursachen umfasst.

6. Verfahren nach einem der vorhergehenden Ansprüche, umfassend Bestimmen für jede Root-Ursache RC_j, ob die Zeitreihe, die zu der Root-Ursache RC_j geführt hat, ein oder mehrere physikalische Kriterien erfüllt, die für die Root-Ursache vordefiniert sind, und automatisches Zurückziehen aus der Rangfolge jeder Root-Ursache RC_j, die mindestens eines des einen oder der mehreren physikalischen Kriterien nicht erfüllt.

7. Verfahren nach einem der vorhergehenden Ansprüche, das automatisches Durchführen eines Kausalitätstests zum Filtern der eingestuften Root-Ursachen umfasst.

8. Verfahren nach einem der vorhergehenden Ansprüche, das automatisches Starten eines Testvorgangs umfasst, der zum automatischen und aufeinanderfolgenden Testen der Root-Ursachen RC_j von der am höchsten eingestuften Root-Ursache zu der am niedrigsten eingestuften Root-Ursache konfiguriert ist, wobei der Testvorgang zum Verwenden von Testkriterien konfiguriert ist, die für jede der Root-Ursachen RC_j spezifisch sind.

9. Verfahren nach Anspruch 8, wobei der Testvorgang zum Starten von der am höchsten eingestuften Root-Ursache und zum Anhalten, sobald der Testvorgang ein positives Ergebnis bereitstellt, konfiguriert ist, wobei der Testvorgang zum automatischen Testen einer oder mehrerer überwachter Systemkomponenten (121-129) konfiguriert ist, die der Root-Ursache in der semantischen Datenbank zugeordnet sind.

10. Verfahren nach Anspruch 8 oder 9, wobei der Testvorgang Messen zusätzlicher Zeitreihendaten für jede der Komponenten (121-129), die der Root-Ursache zugeordnet sind, mittels der Sensoren (131-139) umfasst, wobei jeder Testvorgang einer Komponente (121-129) entweder zu dem positiven Ergebnis führt, was bedeutet, dass ein Fehler/Versagen/eine Fehlfunktion gefunden wurde, wobei der Testvorgang in diesem Fall anhält, oder zu einem negativen Ergebnis, was bedeutet, dass kein Fehler/Versagen/keine Fehlfunktion gefunden wurde, wobei dann, wenn alle Komponenten (121-129), die der untersuchten Root-Ursache zugeordnet sind, getestet wurden, der Testvorgang mit der nächsten Root-Ursache in der Rangfolge fortgesetzt wird, bis ein positives Ergebnis für eine Komponente (121-129) erhalten wird, und zur automatischen Einstufung der Root-Ursache auf dem höchsten Rang, für die eine Komponente (121-129) das positive Ergebnis lieferte.

11. Verfahren nach einem der vorhergehenden Ansprüche, das automatisches Verarbeiten des Identifikationsergebnisses durch einen Natursprachenwandler umfasst, der mit Argumentationsfähigkeiten ausgestattet ist und in zum Berichten, natürlicher Sprache, einer Erklärung des detektierten Ereignisses und seiner Root-Ursache konfiguriert ist.

12. Datenverarbeitungssystem (110) zum automatischen Identifizieren einer Root-Ursache eines Ereignisses für ein überwachtes System (120), wobei das Datenverarbeitungssystem (110) einen Prozessor (111) und einen zugänglichen Speicher (112) umfasst und dazu konfiguriert ist, mit einem oder mehreren Sensoren (131-139) und/oder Komponenten (121-129) des überwachten Systems (120) zum Erfassen von Zeitreihendaten, die eine zeitliche Entwicklung eines für die eine oder mehreren Komponenten (121-129) des überwachten Systems (120) gemessenen Werts einer physikalischen Größe repräsentieren, verbunden zu werden, wobei das Datenverarbeitungssystem (110) eine erste Schnittstelle und eine zweite Schnittstelle umfasst und zum Durchführen der Schritte des Verfahrens nach einem der Ansprüche 1 bis 11 konfiguriert ist.

13. Nichtflüchtiges computerlesbares Medium, das mit ausführbaren Anweisungen codiert ist, wobei eine Ausführung der ausführbaren Anweisungen ein oder mehrere Datenverarbeitungssysteme (110) veranlasst, das Verfahrens nach einem der Ansprüche 1 bis 11 durchzuführen.

## Revendications

1. Procédé pour identifier automatiquement une cause fondamentale d'un événement détecté pour un système surveillé (120), le procédé comprenant :
- l'acquisition (201), par l'intermédiaire d'une première interface, d'au moins un jeu de données de séries chronologiques représentant une évolution temporelle d'une valeur de quantité physique mesurée pour un ou plusieurs composants (121 à 129) du système surveillé (120) ;
- l'injection (202) de chaque jeu de données de séries chronologiques dans un algorithme de détection principal comprenant un ensemble de N algorithmes de détection secondaires, dans lequel chaque algorithme de détection secondaire A_i, i = 1, ..., N, est configuré pour utiliser un critère statistique C_i pour détecter un événement dans les données de séries chronologiques reçues en tant qu'entrée ;
- l'émission en sortie (203), par ledit algorithme de détection principal et pour chaque jeu reçu en tant qu'entrée par ce dernier, d'une étiquette statistique configurée pour coder pour chacun desdits algorithmes de détection secondaires A_i un résultat de détection R_i obtenu par l'algorithme de détection secondaire A_i concerné pour le jeu reçu en tant qu'entrée ;
- pour chaque étiquette statistique, la détermination automatique (204) du fait de savoir si cette dernière code au moins une détection d'un événement, et dans l'affirmative, la génération automatique d'une première requête basée sur l'étiquette statistique et des métadonnées techniques associées au jeu de séries chronologiques à l'origine de ladite étiquette statistique, dans lequel ladite première requête est configurée pour rechercher un ou plusieurs facteurs de causalité pour l'événement détecté ;
- l'utilisation de ladite première requête pour la réalisation automatique (205) d'une première recherche dans une base de données sémantique dans le but de déterminer une liste Q1_CF de facteurs de causalité pour ledit événement détecté, dans lequel ladite base de données sémantique est configurée pour décrire le système surveillé ;
- l'utilisation (206) de ladite liste Q1_CF pour créer une deuxième requête configurée pour déterminer une liste Q2_RC de causes fondamentales pour l'événement détecté, dans lequel ladite deuxième requête est une fonction de la liste Q1_CF et est configurée pour trouver dans ladite base de données sémantique toute cause fondamentale qui concerne au moins l'un des facteurs de causalité de ladite liste Q1_CF ;
- l'utilisation (207) de ladite deuxième requête pour la réalisation automatique d'une deuxième recherche dans la base de données sémantique dans le but de déterminer ladite liste Q2_RC de causes fondamentales RC_j pour ledit événement détecté, dans lequel j = 1, ..., M, avec M étant le nombre de causes fondamentales trouvées lors de la réalisation de la deuxième recherche ;
- pour chaque cause fondamentale RC_j de ladite liste Q2_RC, le fait de trouver automatiquement (208), dans ladite base de données sémantique et par l'exécution d'une troisième requête, tous les facteurs de causalité associés à la cause fondamentale RC_j, et le listage pour chaque cause fondamentale RC_j de la liste Q2_RC des facteurs de causalité trouvés dans une liste Q3_RC_j ;
- la détermination automatique (209) pour chaque cause fondamentale RC_j du nombre de facteurs de causalité compris au sein de la liste Q3_RC_j qui sont également compris au sein de la liste Q1_CF, et le classement des causes fondamentales RC_j en accord avec les nombres déterminés, dans lequel plus le nombre est élevé, plus le rang est élevé ;
- la fourniture automatique (210), par l'intermédiaire d'une deuxième interface, d'un résultat d'identification pour l'identification de la cause fondamentale de l'événement détecté, dans lequel ledit résultat d'identification comprend un identifiant de la cause fondamentale avec le rang le plus élevé, et facultativement un identifiant dudit composant pour lequel un résultat positif a été obtenu.

2. Procédé selon la revendication 1, dans lequel lesdites métadonnées techniques comprennent au moins :
- le type de quantité physique mesurée ;
- le type de composant pour lequel le jeu de données de séries chronologiques a été acquis ou mesuré ;
- un emplacement d'un capteur (131 à 139) qui a acquis ou mesuré ledit jeu de données de séries chronologiques concernant une topologie du système surveillé (120).

3. Procédé selon la revendication 1 ou la revendication 2, dans lequel la base de données sémantique est un graphe de connaissances (400) comprenant :
- un jeu de nœuds (321, 322, 324, 325, 327) représentant chacun un composant différent (121, 122, 124, 125, 127) du système surveillé (120) ;
- un jeu de nœuds (331 à 335) représentant chacun un type différent de quantité physique qui peut être mesurée pour le système surveillé (120) ;
- un jeu de N nœuds N_i (351 à 354), dans lequel le nœud N_i représente la détection d'un événement par l'algorithme secondaire A_i ;
- un jeu de nœuds (341 à 344) représentant chacun un facteur de causalité différent capable d'influencer techniquement les valeurs de l'une desdites quantités physiques lorsqu'elle est mesurée pour l'un desdits composants (121, 122, 124, 125, 127) ;
- un jeu de nœuds (361 à 364) représentant chacun une cause fondamentale différente pour l'événement détecté ;
- un jeu d'arêtes reliant les nœuds mentionnés ci-dessus et définissant des relations entre ces derniers.

4. Procédé selon l'une quelconque des revendications précédentes, comprenant la détermination automatique d'un niveau de confiance pour chacune desdites causes fondamentales RC_j, dans lequel ledit niveau de confiance est égal à la différence absolue entre le nombre de facteurs de causalité compris au sein de la liste Q1_CF et le nombre de facteurs de causalité compris au sein de la liste Q3_RC_j, moyennant quoi, plus une différence absolue est petite, plus un niveau de confiance est élevé.

5. Procédé selon la revendication 4, comprenant l'utilisation du niveau de confiance en tant que pondération pour la remise en ordre des causes fondamentales précédemment classées.

6. Procédé selon l'une quelconque des revendications précédentes, comprenant la détermination pour chaque cause fondamentale RC_j du fait de savoir si la série chronologique qui a mené à ladite cause fondamentale RC_j satisfait à un ou plusieurs critères physiques prédéfinis pour ladite cause fondamentale, et le retrait automatique dudit classement de toute cause fondamentale RC_j qui ne satisfait pas à au moins l'un desdits un ou plusieurs critères physiques.

7. Procédé selon l'une quelconque des revendications précédentes, comprenant la réalisation automatique d'un test de causalité pour filtrer les causes fondamentales classées.

8. Procédé selon l'une quelconque des revendications précédentes, comprenant le lancement automatique d'une procédure de test configurée pour tester automatiquement et successivement les causes fondamentales RC_j, de la cause fondamentale classée la plus élevée à la cause fondamentale classée la plus basse, dans lequel ladite procédure de test est configurée pour utiliser des critères de test qui sont spécifiques à chacune des causes fondamentales RC_j.

9. Procédé selon la revendication 8, dans lequel la procédure de test est configurée pour démarrer à partir de la cause fondamentale classée la plus élevée et s'arrêter dès que la procédure de test fournit un résultat positif, dans lequel ladite procédure de test est configurée pour tester automatiquement un ou plusieurs composants (121 à 129) de système surveillé associés à ladite cause fondamentale dans la base de données sémantique.

10. Procédé selon la revendication 8 ou la revendication 9, dans lequel ladite procédure de test comprend la mesure au moyen desdits capteurs (131 à 139) de données de séries chronologiques supplémentaires pour chacun desdits composants (121 à 129) associés à la cause fondamentale, chaque procédure de test d'un composant (121 à 129) ayant pour résultat soit ledit résultat positif, signifiant qu'une défaillance/un défaut/un dysfonctionnement a été trouvé(e), auquel cas la procédure de test s'arrête, soit un résultat négatif, signifiant qu'aucune défaillance/aucun défaut/aucun dysfonctionnement n'a été trouvé(e), auquel cas, si tous les composants (121 à 129) associés à la cause fondamentale en cours d'étude ont été testés, alors la procédure de test continue avec la cause fondamentale suivante dans ledit classement jusqu'à ce qu'un résultat positif soit obtenu pour un composant (121 à 129), et pour classer automatiquement au rang le plus élevé la cause fondamentale pour laquelle un composant (121 à 129) a fourni ledit résultat positif.

11. Procédé selon l'une quelconque des revendications précédentes, comprenant le traitement automatique dudit résultat d'identification par un convertisseur en langage naturel (*Natural Language Convertor*) doté de capacités de raisonnement et configuré pour rapporter, en langage naturel, une explication de l'événement détecté et de sa cause fondamentale.

12. Système de traitement de données (110) pour identifier automatiquement une cause fondamentale d'un événement pour un système surveillé (120), ledit système de traitement de données (110) comprenant un processeur (111) et une mémoire accessible (112) et étant configuré pour être connectable à un ou plusieurs capteurs (131 à 139) et/ou composants (121 à 129) du système surveillé (120) pour acquérir des données de séries chronologiques représentant une évolution temporelle d'une valeur de quantité physique mesurée pour lesdits un ou plusieurs composants (121 à 129) du système surveillé (120), le système de traitement de données (110) comprenant une première interface et une deuxième interface, et étant configuré pour mettre en œuvre les étapes du procédé selon l'une des revendications 1 à 11.

13. Support lisible par ordinateur non transitoire, codé avec des instructions exécutables, dans lequel une exécution desdites instructions exécutables amène un ou plusieurs systèmes de traitement de données (110) à réaliser le procédé selon l'une des revendications 1 à 11.
